(19) Europäisches Patentamt
European Patent Office
Office européen des brevets

(11) **EP 4 389 794 A1**

(12) **EUROPEAN PATENT APPLICATION**
published in accordance with Art. 153(4) EPC

(43) Date of publication:
**26.06.2024 Bulletin 2024/26**

(51) International Patent Classification (IPC):
***C08G 65/34*** *(2006.01)* ***C08G 65/46*** *(2006.01)*

(21) Application number: 22858631.9

(22) Date of filing: **01.08.2022**

(86) International application number:
**PCT/KR2022/011288**

(87) International publication number:
**WO 2023/022392 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.08.2021 KR 20210108050**

(71) Applicant: **SK Chemicals Co., Ltd.**
**Seongnam-si, Gyeonggi-do 13494 (KR)**

(72) Inventors:
• **CHUNG, Jae-Il**
**Seongnam-si, Gyeonggi-do 13494 (KR)**
• **CHO, Han-Gyeol**
**Seongnam-si, Gyeonggi-do 13494 (KR)**
• **CHO, Hyun Jun**
**Seongnam-si, Gyeonggi-do 13494 (KR)**

(74) Representative: **Berggren Oy**
**P.O. Box 16**
**Eteläinen Rautatiekatu 10A**
**00101 Helsinki (FI)**

(54) **POLYTRIMETHYLENE ETHER GLYCOL AND METHOD FOR MANUFACTURING SAME**

(57) According to the invention, there are provided a method for preparing polytrimethylene ether glycol, capable of removing cyclic oligomer, 1,3-PDO and oxidation by-products from the polytrimethylene ether glycol product, and polytrimethylene ether glycol prepared thereby.

EP 4 389 794 A1

**Description**

**[Technical Field]**

This invention relates to polytrimethylene ether glycol and a method for preparation thereof.

**[Background Art]**

Polyurethane is polymer resin prepared by the reaction of isocyanate and polyol, and can be applied for most uses for which polymer is applied, such as coating, adhesive, fiber, plastic and elastic foamed body. However, polyurethane industries have so far relied on crude oil-based value chain and encountered new challenge due to worldwide weather change and environmental pollution by plastic, and thus, attempts are being made to use renewable biomass resources to reduce greenhouse gases.

Polyol, which is main raw material of polyurethane, may be largely classified into ester type and ether type, and the industrial application of polyol using biomass-based raw material has been so far limited to ester type. However, the industrial application of ether type occupying 70% or more of the amount of polyol for polyurethane is extremely limited due to the limitation of properties and cost.

Polytrimethylene ether glycol(PO3G) using 1,3-propanediol(1,3-PDO) derived from biomass as raw material is most practical alternative to ether type polyol to reduce greenhouse gases, and studies on industrial application of PO3G have been so far progressed.

Furthermore, it was confirmed that polyurethane polymer applying PO3G has excellent properties of elastic recovery, abrasion resistance, and the like, compared to the existing polyurethane applying ether type polyol, and it is expected that the application field of bio polyurethane applying PO3G will expand beyond drop in type bio polymer exhibiting identical properties to petrochemical polymer.

Meanwhile, the polymerization method of PO3G is an alcohol condensation reaction progressed in the presence of a strong acid catalyst, as described in US Patent Registration No. 6,977,291 and US Patent Registration No. 7,745,668, and the polymer growth can be understood as a step growth mechanism. On the other hand, the polymerization of the existing petrochemical PPG and PTMG is a ring open polymerization reaction, and the polymer growth is progressed by a chain growth mechanism, and due to such a difference, PO3G has broad polydispersity, compared to other alkylene ether polyols, and improvement method therefor is required.

Further, the condensation polymerization reaction reacts 1,3-propanediol under an acid catalyst for a long time, and thereby, various oxidation by-products and low molecular weight oligomers are prepared together.

As the oxidation by-products, acrolein, propanal, 1-propanol, allyl alcohol, and the like may be mentioned, and in case theses materials exist, discoloration may be induced during storage, oxidation stability of products may be lowered, VOC may be caused during processing, and reaction selectivity and speed may be influenced during post-processing.

Further, among oligomers formed during the reaction, cyclic type oligomer may cause side effects in the industrial application of PO3G. For example, polyester such as polyethylene terephthalate (PET), polytrimethylelene terephthalate (PTT), poly lactic acid (PLA), and the like may be mentioned. In the case of polyester, it is known that remaining cyclic oligomer is evaporated during spinning or film molding, thus causing unwanted pollution and corrosion of molding apparatus, and causing quality problem of molded product. Specifically, in the case of a spinning process, dyeing properties of yarn as well as spinning processability are influenced, and in the case of extrusion molding, thickness deviation of molded sheet is caused. Further, in the case of injection molded product, remaining cyclic oligomer causes deterioration of mechanical properties, and migration of cyclic oligomer to product surface. In the case of polytetramethylene ether glycol (PTMG), which is ether-based polyol, it is also known that if cyclic oligomer formed during the preparation is not smoothly removed, identical problems caused by cyclic oligomer is caused in molded polyurethane products. Further, in the case of polytrimethylene ether glycol, polymerization is progressed by alcohol condensation reactions as explained above, and thus, PDO, linear dimer, and the like having high polarity exist in the product, and polarity difference from polytrimethylene ether glycol is significantly generated, thus exhibiting localized distribution in the product, and further, causing property difference of polytrimethylene ether glycol. On the other hand, in the case of petrochemical ether polyol such as PPG and PTMG, and the like, it is highly unlikely that linear monomers or dimers having high polarity are formed and remained.

Thus, there is a continued demand for effective removal of cyclic oligomer, 1,3-PDO and oxidation by-products, and stable quality management for industrial application of PO3G.

**[DETAILED DESCRIPTION OF THE INVENTION]**

**[Technical Problem]**

It is an object of the invention to provide a method for preparing polytrimethylene ether glycol, capable of removing cyclic oligomer, 1,3-PDO and oxidation by-products from the polytrimethylene ether glycol product, and polytrimethylene ether glycol prepared thereby.

**[Technical Solution]**

In order to achieve the object, there is provided polytrimethylene ether glycol having polydispersity(Mw/Mn) of 2.0 to 2.5, and cyclic oligomer content of 0.1 wt% or less.

If polytrimethylene ether glycol is prepared from 1,3-propanediol(1,3-PDO) through a condensation polymerization reaction, polytrimethylene ether glycol having broad polydispersity is prepared, and cyclic oligomer, 1,3-PDO and oxidation by-products are prepared together.

The broad polydispersity mainly arises from prepared cyclic oligomer, and it causes property deviation of the product using polytrimethylene ether glycol, thus limiting the application field of polytrimethylene ether glycol. Further, 1,3-PDO corresponding to unreacted material and a variety of oxidation by-products have a bad influence on the properties of polytrimethylene ether glycol, and further, themselves have unpleasant smell, and have a bad influence on the reaction speed and selectivity during post-processing reaction using polytrimethylene ether glycol, and also have a bad influence on the color of polytrimethylene ether glycol.

Thus, a process of purifying polytrimethylene ether glycol prepared from 1,3-propanediol through a condensation polymerization reaction is required. For this purpose, it is commonly purified through an evaporation process, but during the purification process, polytrimethylene ether glycol stays for a long time at high temperature, thus generating thermal oxidation.

Thus, the invention is characterized in that cyclic oligomer, 1,3-PDO and oxidation by-products are removed from polytrimethylene ether glycol by conducting thin film evaporation under specific conditions as described later, and purified polytrimethylene ether glycol has narrow polydispersity, thus reducing molecular weight deviation.

Preferably, polytrimethylene ether glycol according to the invention has polydispersity of 2.1 or more, or 2.2 or more; and 2.4 or less, or 2.3 or less. Such polydispersity is not significantly decreased from the polydispersity of polytrimethylene ether glycol prepared from 1,3-PDO. Namely, it means that in the polytrimethylene ether glycol according to the invention, only the components affecting the properties of polytrimethylene ether glycol are effectively removed.

Preferably, cyclic oligomer content in the polytrimethylene ether glycol according to the invention is 0.09 wt% or less, 0.08 wt% or less, 0.07 wt% or less, 0.06 wt% or less, or 0.05 wt% or less. Meanwhile, the 'cyclic oligomer' means material having a cyclic chemical structure, in which functional groups are lost by the reaction in the molecule during condensation polymerization of 1,3-PDO, and particularly, it means herein highly volatile dimer to pentamer (2 to 5 monomers polymerized) causing problem in use of the product. Further, the lower limit of the cyclic oligomer content in polytrimethylene ether glycol is theoretically 0 wt%, but for example, it may be 0.001 wt% or more, 0.002 wt% or more, 0.003 wt% or more, 0.004 wt% or more, or 0.005 wt% or more.

Preferably, 1,3-propanediol content in the polytrimethylene ether glycol according to the invention is 0.1 wt% or less. More preferably, 1,3-propanediol content in the polytrimethylene ether glycol according to the invention is 0.09 wt% or less, 0.08 wt% or less, 0.07 wt% or less, 0.06 wt% or less, or 0.05 wt% or less. Further, the lower limit of the 1,3-propanediol content in the polytrimethylene ether glycol is theoretically 0 wt%, but for example, it may be 0.001 wt% or more, 0.002 wt% or more, 0.003 wt% or more, 0.004 wt% or more, or 0.005 wt% or more.

Preferably, polytrimethylene ether glycol according to the invention has number average molecular weight of 1,500 to 4,000. More preferably, polytrimethylene ether glycol according to the invention has number average molecular weight of 1,600 or more, 1,700 or more, 1,800 or more, or 1,900 or more; and 3,800 or less, 3,600 or less, 3,400 or less, 3,200 or less, 3,000 or less, or 2,800 or less.

According to the invention, there is also provided a method for preparation of the above explained polytrimethylene ether glycol, comprising steps of:

polymerizing 1,3-propanediol to prepare a product comprising polytrimethylene ether glycol (step 1); and
evaporating the product under conditions of a temperature of 100 to 250°C, and a pressure of 100.0 to 1.0 torr, to remove cyclic oligomer (step 2).

Hereinafter, the inventio will be explained according to step.

**Preparation step of** polytrimethylene **ether glycol (step** 1)

The step 1 of the invention is a step wherein 1,3-propanediol is polymerized to prepare a product comprising polytrimethylene ether glycol.

The reaction conditions of the step 1 are not specifically limited as long as polytrimethylene ether glycol is prepared from 1,3-propanediol, and preferably, polytrimethylene ether glycol is prepared by polycondensation of 1,3-propanediol using a polycondensation catalyst.

Specifically, the polycondensation catalyst is selected from the group consisting of Lewis acid, Bronsted acid, super acid and a mixture thereof. More preferably, the catalyst is selected from the group consisting of inorganic acid, organic sulfonic acid, heteromultivalent acid, and metal salt. Most preferably, the catalyst is selected from the group consisting of sulfuric acid, fluorosulfonic acid, phosphoric acid, p-toluenesulfonic acid, benzenesulfonic acid, phosphotungstic acid, phosphomolybdic acid, trifluoromethansulfonic acid, 1,1,2,2-tetrafluoroethanesulfonic acid, 1,1,1,2,3,3-hexafluoropropanesulfonic acid, bismuth triflate, yttrium triflate, ytterbium triflate, neodymium triflate, lanthanum triflate, scandium triflate and zirconium triflate. The catalyst is also selected from the group consisting of zeolite, fluorinated alumina, acid-treated silica, acid-treated silica-alumina, heteromultivalent acid, and heteromultivalent acid supported on zirconia, titania, alumina and/or silica. More preferably, as the polycondensation catalyst, sulfuric acid is used.

It is preferable that the catalyst is used at the concentration of 0.1 to 20 wt%, based on the weight of the reaction mixture, more preferably 1 wt% to 5 wt%.

Further, preferably, the polycondensation is conducted at 150°C to 250°C, more preferably 160°C to 220°C. Further, it is preferable that the reaction is conducted in the presence of inert gas, preferably under nitrogen.

Further, after the polycondensation, in order to remove acid bonded to polytrimethylene ether glycol, a hydrolysis reaction may be additionally progressed. Further, following the hydrolysis reaction, a neutralization reaction may be additionally progressed.

**Evaporation step (step 2)**

The step 2 of the invention is a step wherein the product of step 1 is evaporated to remove cyclic oligomer, 1,3-PDO and oxidation by-products. For this purpose, thin film evaporation of step 2 is conducted under conditions of a temperature of 100 to 250°C, and a pressure of 100.0 to 1.0 torr.

Meanwhile, as used herein, the term 'thin film evaporation' means a method of distillation by making a mixture to be separated in the form of a thin film to increase the surface area contacting a heat source. For example, thin film evaporation is enabled in such a way that a mixture introduced in a thin film evaporator forms a thin film on the inner wall surface of the thin film evaporator by physical force (for example, wiper), and an appropriate temperature is applied thereto through a heat source(for example, heating media) to evaporate. Further, if a pressure inside a thin film evaporator is lowered, vapor pressure of material may decrease, and thus, evaporation may occur at a temperature lower than the original boiling point. Further, inside the thin film evaporator, a condenser for recovering evaporated material, namely, material to be removed, may be equipped.

Moreover, the thin film evaporation has an advantage in that a mixture to be separated may be continuously applied. For example, continuous thin film evaporation is enabled in such a way that a mixture to be separated is continuously introduced at the upper part of the evaporator, and the purified mixture is recovered at the lower part of the evaporator.

The thin film evaporation of step 2 is conducted at a temperature of 100 to 250°C, preferably 110°C or more, 120°C or more, 130°C or more, 140°C or more, 150°C or more, 160°C or more, 170°C or more, or 180°C or more; and 240°C or less, or 230°C or less. If the temperature is less than 150°C, the effect of evaporation may be slight, and thus, it may be difficult to remove material to be removed, and if the temperature is greater than 250°C, there is a concern about generation of thermal oxidation of polytrimethylene ether glycol.

The thin film evaporation of the step 2 is conducted at a pressure of 100.0 to 10.0 torr, preferably 90.0 torr or less, 80.0 torr or less, 70.0 torr or less, 60.0 torr or less, or 50.0 torr or less, and 15.0 torr or more, or 20.0 torr or more. If the pressure is greater than 100.0 torr, separation efficiency may be lowered, and if the pressure is less than 1.0 torr, separation efficiency may become excessively high, and thus, even components that should remain in the product may be separated, and thus, yield of the final product may be lowered.

Meanwhile, the components evaporated in the thin film evaporator, namely, materials to be removed, may be discharged to the lower part of the thin film evaporator through the condenser, and thereby, remaining purified mixture, namely, evaporation residue may be separately recovered.

**[ADVANTAGEOUS EFFECTS]**

As explained above, according to the invention, there are provided a method for preparing polytrimethylene ether glycol, capable of removing cyclic oligomer, 1,3-PDO and oxidation by-products from the polytrimethylene ether glycol product, and polytrimethylene ether glycol prepared thereby.

**[DETAILED DESCRIPTION OF THE EMBODIMENTS]**

Hereinafter, embodiments of the invention will be explained in more detail in the following Examples. However, these examples are presented only as the illustrations of the invention, and the invention is not limited thereby.

In the following Preparation Examples, Examples and Comparative Examples, properties were measured as follows.

1) Polydispersity(Mw/Mn), and total oligomer content(wt%)

Polytrimethylene ether glycol prepared in each Example was dissolved in THF(tetrahydrofuran) at the concentration of 1 wt%, and using gel permeation chromatography(manufacturer: WATERS, model: Alliance, Detecter : 2414 RI Detector, Column: Strygel HR 0.5/1/4), weight average molecular weight(Mw) and number average molecular weight(Mn) were respectively calculated with polyethylene glycol as standard material. From the Mw and Mn measured, polydispersity value and the content of low molecular weight oligomer having Mn of 400 or less were calculated.

2) 1,3-PDO content(wt%), and cyclic oligomer content(wt%)

0.5 g of polytrimethylene ether glycol prepared in each Example was dissolved in 10 mL of methanol, and measured with gas chromatography(model : agilent 7890, column : DBWAX), and 1 g of each reference material was dissolved in 10 mL of methanol, and then, additionally diluted according to concentration and measured as standard reference, and 1,3-PDO content(wt%) and cyclic oligomer content(wt%) included in polytrimethylene ether glycol were calculated.

3) Oxidation by-product content(wt%)

1 g of polytrimethylene ether glycol prepared in each Example was put in head space vial, and then, measured using Head space GCF(Head space : Thermo Triplus 500m GC : Agilent 7890, column : DBWAX), and 0.1g of each reference material(1-propanol, Allyl alcohol) was dissolved in 10 mL of DMSO, and then, additionally diluted according to concentration and measured as standard reference, and the content of oxidation by-products included in polytrimethylene ether glycol was calculated.

4) OHV

6 g of polytrimethylene ether glycol prepared in each Example and 15 mL of acetylation agent(acetic anhydride/pyridine = 10/40 vol%) were introduced in a 100 mL flask, and reacted at 100°C for 30 minutes under reflux atmosphere. After the reaction, the reaction mixture was cooled to a room temperature, and 50 mL of distilled water was introduced. The prepared reaction mixture was subjected to a titration reaction with 0.5 N KOH using an automatic titrator (manufacturer: metrohm, Titrino 716), and OHV was calculated according to the following Mathematical Formula 1.

[Mathematical Formula 1]

$$OHV = 56.11 \times 0.5 \times (A - B) \text{ /amount of sample introduced}$$

In the Mathematical Formula 1,

56.11 means the molecular weight of KOH,
0.5 means the normality of KOH,
A is the dispensing volume of KOH solution used for blank test,
B is the dispensing volume of KOH solution used for sample titration.

The measured OHV was converted into end group average molecular weight(Mn) according to the following Mathematical Formula 2.

[Mathematical Formula 2]

$$Mn = (56.11 \times 2 / OHV) \times 1000$$

**Preparation Example: Preparation of polyol**

1) **Preparation of polyol** A

(Step a)

In a 20 L glass double jacket reactor equipped with a teflon stirrer and sparger, 1,3-propanediol(15 kg) and sulfuric acid(150 g) were filled, and then, polymer was prepared at 166°C under nitrogen sparging for 26 hours, and the reaction by-products were removed through the upper condenser.

(Step b)

And then, deionized water(5 kg) was added, and the produced mixture was maintained at 95°C for 4 hours under nitrogen blowing, thus hydrolyzing acid ester formed during polymerization. After hydrolysis, 170g of soda ash in 1000 mL of deionized water was added, and the mixture was heated to 80°C while stirring under nitrogen stream. The neutralization was continued for 1 hour, and subsequently, the product was dried at 120°C under reduced pressure, and filtered using a Nutche filter to obtain a polytrimethylene ether glycol product.

2) **Preparation of polyol B**

A polytrimethylene ether glycol product was obtained by the same method as the preparation method of polyol A, except that in the step 1, the reaction time was changed from 26 hours to 38 hours.
The properties of polyol A and polyol B respectively prepared were shown in the following Table 1.

[Table 1]

| | OHV | End group titration Mn | Poly dispersity | Cyclic oligomer content (wt%) | Linear Dimer (wt %) | Total Oligomer content (wt%) | PDO content (wt%) | Oxidation by-products content (ppmw) |
|---|---|---|---|---|---|---|---|---|
| Polyol A | 60.88 | 1843.2 | 2.3 | 0.41 | 0.19 | 2.3 | 0.23 | 290 |
| Polyol B | 46.35 | 2421 | 2.4 | 0.32 | 0.12 | 2.1 | 0.08 | 210 |

**Example and Comparative Example**

Using Lab scale thin film evaporation equipment, purification of each polyol prepared in Preparation Examples was conducted.
Specifically, the thin film evaporation equipment was VKL- 70-4 model from VTA company, which is short path distillation type equipped with a condenser inside a distillation column, and has evaporation diameter and surface area of respectively 70 mm and 0.04 m$^2$. After a distillation column jacket was set to an appropriate temperature by hot oil system, and the inside of the column reached a target degree of vacuum by a vacuum pump, each sample prepared above was introduced at the upper part of distillation at an appropriate feed rate. At this time, by a mechanical stirrer equipped with a wiper, polytrimethylene ether glycol is formed as a thin film having uniform thickness in the column, and volatilized low molecular weight materials were condensed in the condenser and discharged toward distillate, and purified polytrimethylene ether glycol was discharged as residue.
For each Comparative Example and Example, 1 hour test was conducted at a feed rate of 1 kg/hr, and after the test, it was sampled to measure the properties, and the results were respectively shown in the following Tables 2 and 3.

[Table 2]

| | Unit | Comparative Example 1 | Example 1 | Example 2 | Example 3 | Example 4 | Example 5 | Example 6 | Example 7 |
|---|---|---|---|---|---|---|---|---|---|
| Feed polyol | - | polyol A | polyol A | polyol A | polyol A | polyol A | polyol A | polyol A | polyol A |
| Feed rate | kg/hr | 1 | 1 | 1 | 1 | 1 | 1 | 1 | 1 |
| Evap. Temp. | °C | 200 | 180 | 180 | 180 | 200 | 200 | 250 | 250 |
| Internal condenser Temp. | °C | 50 | 50 | 50 | 50 | 50 | 50 | 50 | 50 |
| Degree of vacuum | Torr | 0.1 | 5 | 10 | 30 | 30 | 50 | 30 | 50 |
| Distillate | wt% | 2.1 | 0.3 | 0.3 | 0.3 | 0.5 | 0.4 | 0.6 | 0.5 |
| Residue | wt% | 97.9 | 99.7 | 99.7 | 99.7 | 99.5 | 99.6 | 99.4 | 99.5 |
| OHV | - | 52.43 | 58.62 | 58.83 | 59.23 | 57.21 | 58.11 | 56.35 | 56.92 |
| End group average Mn | g/mol | 2140.38 | 1914.36 | 1907.53 | 1894.65 | 1961.55 | 1931.17 | 1991.48 | 1971.54 |
| Polydispersity | - | 1.9 | 2.2 | 2.2 | 2.2 | 2.1 | 2.1 | 2.1 | 2.1 |
| Cyclic oligomer content | wt% | N.D. | 0.02 | 0.03 | 0.06 | N.D | 0.03 | N.D | N.D |
| 1,3-PDO content | wt% | N.D | 0.03 | 0.06 | 0.08 | 0.01 | 0.02 | N.D | 0.01 |
| Linear Dimer content | wt% | N.D | 0.01 | 0.02 | 0.02 | N.D | N.D | N.D | N.D |
| total oligomer content | wt% | 0.19 | 1.82 | 1.85 | 1.88 | 1.72 | 1.78 | 1.47 | 1.61 |
| Oxidation by-products content | Ppm w | N.D | N.D | N.D | N.D | N.D | N.D | N.D | N.D |

[Table 3]

| | Unit | Comparative Example 2 | Example 8 | Example 9 | Example 10 | Example 11 | Example 12 | Example 13 |
|---|---|---|---|---|---|---|---|---|
| Feed polyol | - | polyol B | polyol B | polyol B | polyol B | polyol B | polyol B | polyol B |
| Feed rate | kg/hr | 1 | 1 | 1 | 1 | 1 | 1 | 1 |
| Evap. Temp. | °C | 200 | 180 | 180 | 200 | 200 | 250 | 250 |
| Internal condenser Temp. | °C | 50 | 50 | 50 | 50 | 50 | 50 | 50 |
| Degree of vacuum | Torr | 0.2 | 10 | 30 | 30 | 50 | 30 | 50 |
| Distillate | wt% | 1.8 | 0.3 | 0.3 | 0.7 | 0.4 | 0.8 | 0.7 |
| Residue | wt% | 98.2 | 99.7 | 99.7 | 99.3 | 99.6 | 99.2 | 99.3 |
| OHV | - | 41.09 | 44.85 | 45.23 | 43.65 | 44.15 | 42.96 | 43.48 |
| End group average Mn | g/mol | 2731.00 | 2502.00 | 2481.00 | 2571.00 | 2542.00 | 2612.00 | 2581.00 |
| Polydispersity | - | 2.0 | 2.3 | 2.3 | 2.2 | 2.2 | 2.1 | 2.2 |
| Cyclic oligomer content | wt% | N.D. | 0.03 | 0.06 | N.D | 0.03 | N.D | N,D |
| 1,3-PDO content | wt% | N.D | 0.06 | 0.07 | N.D | 0.02 | N.D | 0.01 |
| Linear Dimer content | wt% | N.D | 0.04 | 0.04 | N.D | N.D | N.D | N.D |
| total oligomer content | wt% | 0.16 | 1.69 | 1.72 | 1.54 | 1.59 | 1.31 | 1.41 |
| Oxidation by-product content | ppmw | N.D | N.D | N.D | N.D | N.D | N.D | N.D |

As shown in Tables 2 and 3, it can be confirmed that by applying thin film evaporation under temperature and pressure conditions according to the invention, contents of cyclic oligomer, 1,3-PDO and linear dimer can be lowered.
Further, compared to thin film evaporation conditions under high vacuum degree as in Comparative Examples 1 and 2, total oligomer content is not significantly lowered, thus increasing yield, and oxidation by-products can be also effectively removed.
It means that under the conditions according to the invention, oxidation by-products, cyclic oligomer, 1,3-PDO and linear dimer, and the like having low vapor pressure, are preferentially separated and removed, while most of linear oligomer capable of participating in urethane reactions remain in the residue, and thus, without significant change in polydispersity, thin film evaporation yield can be increased, and only components affecting the properties of polytrimethylene ether glycol can be effectively separated.

**Claims**

1.   Polytrimethylene ether glycol having polydispersity(Mw/Mn) of 2.0 to 2.5, and cyclic oligomer content of 0.1 wt% or less.

2.   The polytrimethylene ether glycol according to claim 1, wherein the polytrimethylene ether glycol has polydispersity of 2.1 to 2.4.

3. The polytrimethylene ether glycol according to claim 1, wherein the polytrimethylene ether glycol has cyclic oligomer content of 0.05 wt% or less.

4. The polytrimethylene ether glycol according to claim 3, wherein the cyclic oligomer is oligomer having number average molecular weight of 400 or less.

5. The polytrimethylene ether glycol according to claim 1, wherein 1,3-propanediol content in the polytrimethylene ether glycol is 0.1 wt% or less.

6. The polytrimethylene ether glycol according to claim 1, wherein the polytrimethylene ether glycol has number average molecular weight of 1,500 to 4,000.

7. A method for preparing the polytrimethylene ether glycol according to any one of claims 1 to 6, comprising steps of:

polymerizing 1,3-propanediol to prepare a product comprising polytrimethylene ether glycol (step 1); and evaporating the product under conditions of a temperature of 100 to 250°C, and a pressure of 100.0 to 1.0 torr, to remove cyclic oligomer (step 2).

8. The method for preparing polytrimethylene ether glycol according to claim 7, wherein the temperature of step 2 is 180°C to 240°C.

9. The method for preparing polytrimethylene ether glycol according to claim 7, wherein the pressure of step 2 is 100.0 torr to 5.0 torr.

10. The method for preparing polytrimethylene ether glycol according to claim 7, wherein the pressure of step 2 is 50.0 torr to 1.0 torr.

## INTERNATIONAL SEARCH REPORT

| International application No. |
|---|
| **PCT/KR2022/011288** |

| **A.** | **CLASSIFICATION OF SUBJECT MATTER** |
|---|---|

**C08G 65/34**(2006.01)i; **C08G 65/46**(2006.01)i

According to International Patent Classification (IPC) or to both national classification and IPC

| **B.** | **FIELDS SEARCHED** |
|---|---|

Minimum documentation searched (classification system followed by classification symbols)

C08G 65/34(2006.01); B01D 3/12(2006.01); C07C 41/03(2006.01); C07C 41/09(2006.01); C08F 16/04(2006.01); C08G 65/30(2006.01); C08G 65/46(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 폴리트리메틸렌에테르글리콜(polytrimethylene ether glycol), 분자량분포(Mw/Mn), 다분산도(polydispersity), 싸이클릭 올리고머(cyclic oligomer)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | KR 10-2002-0063213 A (E.I.DU PONT DE NEMOURS AND COMPANY) 01 August 2002 (2002-08-01)<br>See claims 1-17; and paragraphs [0019] and [0061]. | 1-10 |
| A | WO 2019-066310 A1 (SK CHEMICALS CO., LTD.) 04 April 2019 (2019-04-04)<br>See claims 1, 2, 4 and 5-8. | 1-10 |
| A | KR 10-2014-0038423 A (E.I.DU PONT DE NEMOURS AND COMPANY) 28 March 2014 (2014-03-28)<br>See claim 1; and paragraphs [0041] and [0052]. | 1-10 |
| A | KR 10-2007-0024607 A (E.I.DU PONT DE NEMOURS AND COMPANY) 02 March 2007 (2007-03-02)<br>See claims 1-24. | 1-10 |
| A | KR 10-0233797 B1 (E. I. DU PONT DE NEMOURS AND COMPANY) 01 December 1999 (1999-12-01)<br>See claims 1-6. | 1-10 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2022** | **11 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# INTERNATIONAL SEARCH REPORT
**Information on patent family members**

International application No.

**PCT/KR2022/011288**

| Patent document<br>cited in search report | | | Publication date<br>(day/month/year) | Patent family member(s) | | | Publication date<br>(day/month/year) |
|---|---|---|---|---|---|---|---|
| KR | 10-2002-0063213 | A | 01 August 2002 | AU | 2001-25814 | A1 | 25 June 2001 |
| | | | | CA | 2389578 | A1 | 21 June 2001 |
| | | | | CN | 1411482 | A | 16 April 2003 |
| | | | | EP | 1246861 | A1 | 09 October 2002 |
| | | | | EP | 1246861 | B1 | 17 May 2006 |
| | | | | JP | 2003-517071 | A | 20 May 2003 |
| | | | | JP | 4786847 | B2 | 05 October 2011 |
| | | | | MX | PA02005943 | A | 28 January 2003 |
| | | | | US | 2002-0007043 | A1 | 17 January 2002 |
| | | | | US | 6977291 | B2 | 20 December 2005 |
| | | | | WO | 01-44348 | A1 | 21 June 2001 |
| WO | 2019-066310 | A1 | 04 April 2019 | CN | 111094392 | A | 01 May 2020 |
| | | | | EP | 3689943 | A1 | 05 August 2020 |
| | | | | JP | 2020-535279 | A | 03 December 2020 |
| | | | | KR | 10-2019-0038162 | A | 08 April 2019 |
| | | | | TW | 201920356 | A | 01 June 2019 |
| | | | | US | 2020-0277437 | A1 | 03 September 2020 |
| KR | 10-2014-0038423 | A | 28 March 2014 | CN | 103492460 | A | 01 January 2014 |
| | | | | CN | 103492460 | B | 11 May 2016 |
| | | | | EP | 2702089 | A2 | 05 March 2014 |
| | | | | EP | 2702089 | B1 | 05 April 2017 |
| | | | | JP | 2014-518852 | A | 07 August 2014 |
| | | | | JP | 5936244 | B2 | 22 June 2016 |
| | | | | TW | 201245277 | A | 16 November 2012 |
| | | | | US | 2012-0277478 | A1 | 01 November 2012 |
| | | | | US | 8884073 | B2 | 11 November 2014 |
| | | | | WO | 2012-148849 | A2 | 01 November 2012 |
| | | | | WO | 2012-148849 | A3 | 28 March 2013 |
| KR | 10-2007-0024607 | A | 02 March 2007 | CA | 2565353 | A1 | 26 January 2006 |
| | | | | CN | 1968916 | A | 23 May 2007 |
| | | | | EP | 1756028 | A1 | 28 February 2007 |
| | | | | JP | 2008-503486 | A | 07 February 2008 |
| | | | | TW | 200613258 | A | 01 May 2006 |
| | | | | US | 2005-0283028 | A1 | 22 December 2005 |
| | | | | US | 7074969 | B2 | 11 July 2006 |
| | | | | WO | 2006-009857 | A1 | 26 January 2006 |
| KR | 10-0233797 | B1 | 01 December 1999 | EP | 0629218 | A1 | 21 December 1994 |
| | | | | JP | 07-505178 | A | 08 June 1995 |
| | | | | KR | 95-7000346 | A | 16 January 1995 |
| | | | | US | 5282929 | A | 01 February 1994 |
| | | | | US | 5302255 | A | 12 April 1994 |
| | | | | WO | 93-18083 | A1 | 16 September 1993 |

Form PCT/ISA/210 (patent family annex) (July 2022)

**EP 4 389 794 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6977291 B
- US 7745668 B